Europäisches Patentamt

European Patent Office

Office européen des brevets

(11) Numéro de publication: **0 334 436**

**A1**

## DEMANDE DE BREVET EUROPEEN

(21) Numéro de dépôt: **89200671.9**

(22) Date de dépôt: **17.03.89**

(51) Int. Cl.⁴: **A01G 23/06**

(30) Priorité: **24.03.88 BE 8800340**

(43) Date de publication de la demande:
**27.09.89 Bulletin 89/39**

(84) Etats contractants désignés:
**DE ES FR GB IT NL SE**

(71) Demandeur: **Gheleyns, Eric**
**Westkapellestraat 405**
**B-8300 Knokke-Heist(BE)**

(72) Inventeur: **Gheleyns, Eric**
**Westkapellestraat 405**
**B-8300 Knokke-Heist(BE)**

(74) Mandataire: **Pieraerts, Jacques et al**
**Bureau Gevers S.A. rue de Livourne 7 bte 1**
**B-1050 Bruxelles(BE)**

(54) **Machine pour broyer des souches d'arbres, des racines et autres.**

(57) L'invention concerne une machine pour broyer des souches d'arbres, des racines et autres, caractérisée en ce qu'elle comporte les éléments suivants :

1. au moins un tambour, entre autres formé d'un cylindre (7) qui est pourvu de burins (14) sur son contour;

2. des moyens pour faire tourner ledit cylindre autour de son axe;

3. des moyens pour ajuster la profondeur à laquelle ledit cylindre (7) doit travailler et pour maintenir ledit cylindre (7) à la profondeur ajustée.

Fig.1.

EP 0 334 436 A1

## Machine pour broyer des souches d'arbres, des racines et autres.

L'invention concerne une machine pour broyer des souches d'arbres, des racines et autres.

Faire disparaître systématiquement des souches d'arbres et des racines est un travail dur et pénible, lorsqu'on fait appel à des câbles et des tracteurs, et qui de plus mène à un résultat très variable, même lorsqu'on utilise des machines de fraisage munies d'une ou de plusieurs têtes de fraisage. De telles têtes de fraisage offrent encore de très gros désavantages par le fait que les résultats obtenus sont très irréguliers, quoi que ces machines offrent un progrès important par rapport à la méthode appliquée auparavent pour arracher du sol les souches des arbres.

L'invention a maintenant pour but de réaliser une machine pour broyer des souches d'arbres, des racines et autres qui, après avoir abattu les arbres, seraient restés dans le sol et qui permet de réaliser une structure homogène du sol ou au moins très appropriée, grâce à laquelle, après avoir très facilement réalisé un labour, on peut semer de l'herbe, des graines ou d'autres semences.

En particulier l'invention a pour but de réaliser une machine qui rend possible le broyage ou la taille de souches d'arbres et de racines sur des bandes qui s'étendent régulièrement, et ceci à une profondeur ajustable.

Pour réaliser cela suivant l'invention, la machine suivant l'invention comporte les éléments suivants :

1. au moins un tambour, entre autres formé d'un cylindre qui est pourvu de burins sur son contour;

2. des moyens pour faire tourner ledit cylindre autour de son axe;

3. des moyens pour ajuster la profondeur à laquelle ledit cylindre doit travailler et pour maintenir ledit cylindre à la profondeur ajustée.

Toujours suivant l'invention lesdits burins sont montés à l'extrémité de bras sensiblement radiaux qui sont soudés sur ledit cylindre.

Pour réaliser une utilisation avantageuse du cylindre lesdits bras sont soudés en rangées sur ledit cylindre et tous les bras d'une rangée sont cachés par rapport aux bras de deux rangées voisines, de telle manière qui par une rotation complète dudit cylindre une surface uniforme du sol est traitée par les burins montés sur lesdits bras, ladite surface du sol correspond à peu près au développement dudit cylindre.

Dans une forme de réalisation particulière et permettant d'assurer l'échange des burins, chaque bras porte une plaque contre laquelle une contre-plaque peut être vissée, de telle manière qu'un burin est maintenu coincé entre la plaque et la contre-plaque, à cette fin une des plaques, de préférence la contre-plaque, comporte une rainure pour recevoir un burin.

D'autres détails et avantages de l'invention apparaîtront de la description d'une machine suivant l'invention, pour broyer des souches d'arbres, des racines et autres. Cette description est uniquement donnée à titre d'exemple et ne limite pas l'invention. Les références se rapportent aux figures ci-jointes.

La figure 1 est une vue latérale du tambour d'une machine suivant l'invention.

La figure 2 se rapporte à un détail de la machine.

La figure 3 est une représentation schématique vue latéralement, à une autre échelle, de la machine suivant l'invention.

La figure 4 est, à encore une autre échelle, une coupe en travers une extrémité de l'axe d'entraînement du tambour de la machine suivant l'invention.

La figure 5 est une vue latérale d'une pièce servant à relier l'axe d'entraînement au tambour de la machine suivant l'invention.

La figure 6 montre à une plus grande échelle l'installation cachée des bras et des plaques qui y sont reliées, lesquelles plaques servent aux burins sur le tambour de la machine suivant l'invention (vue partielle).

La figure 7 montre une vue de face d'une petite plaque servant à fixer un burin sur un bras.

La figure 8 montre une vue de l'arrière d'une contre-plaque agencée pour collaborer avec une plaque suivant la figure 7.

La figure 9 est une coupe en travers suivant la ligne IX-IX de la figure 7.

La figure 10 est une coupe en travers suivant la ligne X-X de la figure 8.

La figure 11 est une vue de face d'une variante d'une plaque suivant la figure 7.

La figure 12 est une vue de face d'une seconde variante de la plaque suivant la figure 7.

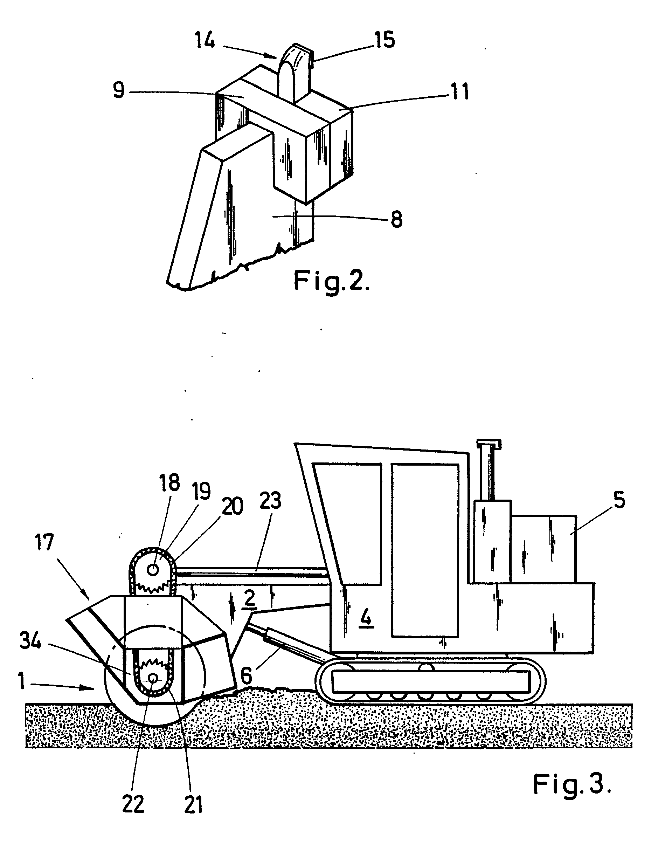

La machine représentée dans ces figures, comporte comme composant principal un tambour 1, qui, par une construction qui sera encore décrite plus en détails, est monté sur un bras 2 mobile (figure 3) qui peut être déplacé vers le haut et le bas et qui est également relié par une articulation, de façon connue, à un châssis comportant une cabine de pilotage 4 et un moteur 5 et étant de préférence monté sur des chenilles 3. Le mouvement vers le haut et le bas du bras 2 est réalisé à l'aide d'un cylindre hydraulique 6. Ces composants sont tous représentés à la figure 3 et il est clair que ce dispositif n'est nullement limitatif. Tel qu'il apparaîtra de la description, la machine suivant l'invention comporte un élément principal qui est formé par le tambour 1 déjà mentionné et qui sera décrit ci-dessous en détail à l'aide entre autres des figures 2, 3 et 6.

Le tambour 1 est constitué d'un cylindre 7 sur lequel sont soudés un nombre de bras 8 radiaux qui sont tous disposés en rangées parallèles à l'axe longitudinal du cylindre. Des plaques 9 en acier sont soudées sur les bras 8, lesquelles plaques présentent deux trous 10. Une contre-plaque 11 collabore avec chacune de ces plaques 9. Ces contre-plaques 11 comportent des perforations 12 pourvus d'un pas-de-vis, lesquelles perforations correspondent aux trous 10 des plaques 9 et sont agencés pour rendre possible le passage de vis.

Chaque bras 8 comporte une entaille 13. Puisque la largeur de ces entailles 13, dans les bras 8, est plus petite que l'épaisseur des plaques 9, les burins 14 peuvent s'appuyer sur le bord de ces entailles.

Les burins 14, dont les têtes sont pourvues de petites plaques 15 widia, s'emboîtent dans les rainures 16 en travers dont le diamètre rectangulaire correspond à peu près au diamètre rectangulaire ou carré des burins 14. Lors du serrage des vis chaque contre-plaque sera fortement serrée contre la plaque 9 correspondante, de telle manière que les burins 14 sont solidement maintenus à leur place.

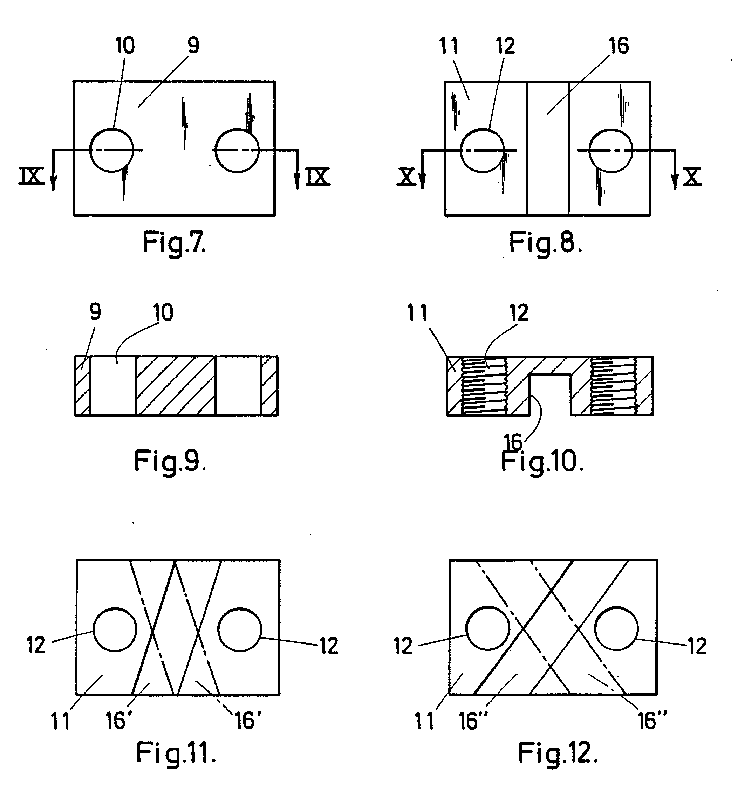

De la figure 6 il apparaît que les bras 8, des différentes rangées, ne sont jamais dans le même plan mais sont cachés de telle manière que la surface du sol traitée par le tambour 1 correspond pratiquement au développement géométrique du cylindre 7.

Les burins 14 sont, à l'exception des burins aux extrémités du tambour, disposés parallèlement au plan des bras 8. Par ces extrémités on sous-entendant les extrémités du cylindre 7. Dans ces dites extrémités les burins sont progressivement ajustés sous un angle qui, le long des deux extrémités du tambour et pour tous les burins appartenant à ces zones, augmente progressivement. Ainsi on peut déduire des figures 11 et 12 que ledit premier et dernier burin du tambour sont ajustés sous un angle d'à peu près 40°, alors que les burins suivants sont ajustés sous un angle d'à peu près 25°. Ceci est nécessaire parce que la rainure causée dans le sol par le mouvement du cylindre 7 doit être légèrement supérieure à la largeur du cylindre 7 même.

L'entraînement du cylindre, qui est protégé par une coiffe 17 à sa partie supérieure, partiellement à l'avant, à l'arrière et de côté, est réalisé à partir de l'axe d'entraînement 18 sur lequel de préférence trois roues dentées 19 sont montées. La transmission est réalisée à l'aide de chaînes 20 qui sont reliées à des roues dentées 21 fixées à l'axe 22 du cylindre 7.

De tels ensembles de chaînes et de roues dentées sont disposés à gauche et à droite du tambour. L'entraînement de ceux-là est donc réalisé par l'axe d'entraînement 18 et par le bras d'entraînement 23 qui sont entraînés à l'aide du moteur 5.

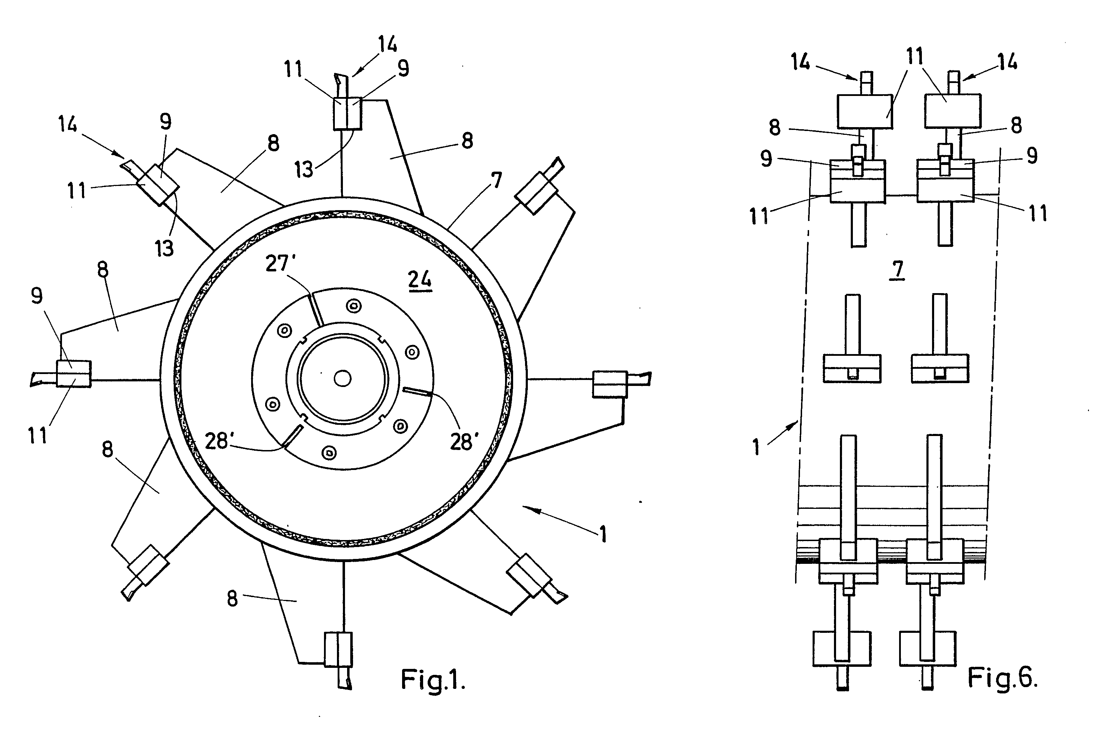

Pour monter l'axe 22 et les roues dentées nécessaires ainsi que les roulements par rapport au cylindre 7 du tambour 1, on fait appel à une construction originale qui sera expliquée à l'aide des figures 1, 4 et 5.

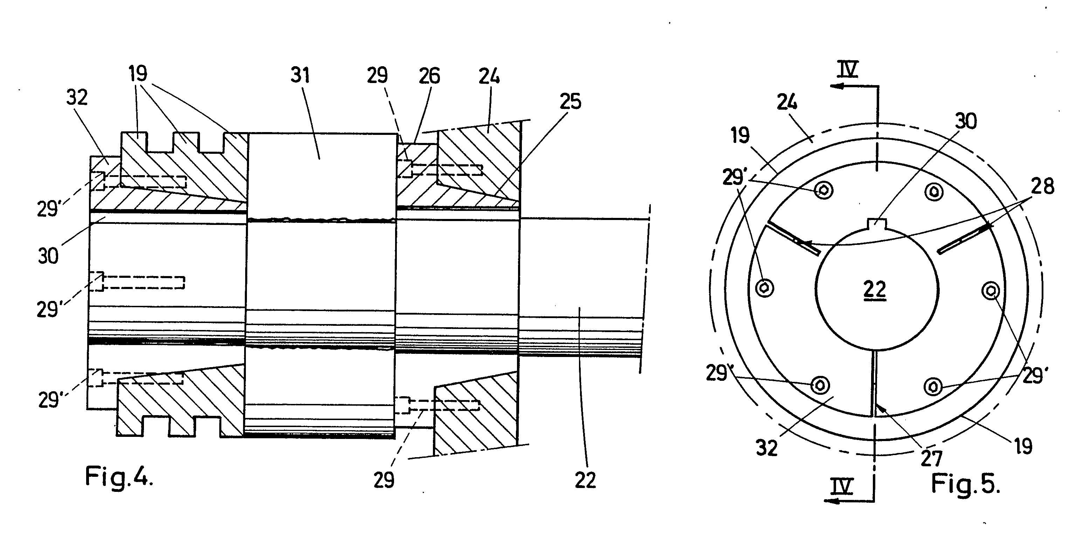

De chaque côté, aux alentours des extrémités du cylindre 7, une plaque 24 transversale est reliée à ce cylindre à l'aide d'une soudure. Au milieu de la plaque 24 circulaire il est prévu une large ouverture pour laisser passer l'axe 22 d'entraînement. Cette ouverture dans la plaque 24 est en oblique. Dans la figure 4 ce bord en oblique de l'ouverture dans la plaque 24 porte la référence 25. La pièce de liaison 26 qui sert également de pièce de centrage, comporte sur une partie une conicité qui correspond à celle du bord 25 en oblique de l'ouverture centrale de la plaque 24. La pièce de liaison comporte une entaille 27 et deux entailles 28 discontinues. Lors du serrage des vis 29 qui retiennent la pièce de liaison 26 sur la plaque 24, cette pièce de liaison 26 va se fixer sur l'axe 22. Sur l'axe 22 il est prévu une cale de liaison 30 qui, lors du montage, se glisse dans une rainure latérale correspondante prévue à l'intérieur de la pièce de liaison 26.

La référence 31 indique un roulement à billes qui est représenté avec des omissions partielles à la figure 4. Les roues dentées 19 déjà mentionnées sont fixées de façon analogue sur l'axe 22 en utilisant ici une forme conique de la pièce de fermeture 32 en forme d'anneau, qui à l'extérieur le long de la ligne 33 a une conicité qui correspond à la conicité interne de l'alésage interne des roues dentées 19. Ici également la pièce de fermeture 32 en forme d'anneau et la rainure latérale qui y est pourvue se glissent au-dessus d'une cale 30 de liaison appartenant à l'axe 22. En serrant les vis 29' la pièce de fermeture en forme d'anneau 32 va se caler sur l'axe 22 puisqu'ici il est également prévu une entaille 27' continue et des entailles 28' discontinues. Ceci assure à la pièce de fermeture en forme d'anneau l'élasticité nécessaire afin que, dû à la structure en forme d'aile, cette pièce de fermeture va se caler sur l'axe 22 lors du serrage des vis 29'.

Les roulements à billes 31 mentionnés ci-dessus sont retenus des deux côtés par les plaques latérales 34 qui, sur leur partie supérieure, sont vissées sur la coiffe 17. L'axe 22 et le cylindre 7 sont donc portés par ces plaques 34 à l'aide desdits roulements à billes. Pour imposer une vitesse suffisamment élevée au tabour 1, laquelle vitesse doit avoir à peu près 360 tours/minute, on a choisi pour la transmission par roues dentées entre les roues dentées 19 et les roues dentées 21 un rapport idéal qui de préférence est de l'ordre de grandeur de 1/3. Dû à la vitesse élevée du cylindre 7, les burins 14, lorsqu'ils entrent en contact avec les souches et les racines des arbres, vont broyer ceux-ci d'une telle manière que les matériaux peuvent tout simplement rester dans le sol. Lors d'un labour qui sera effectué après cela, les copeaux de bois formeront un compost idéal ce qui favorisera sensiblement la structure et la perméabilité du sol.

La distribution des bras 8 et des burins 14 sur le contour du cylindre 7 est choisie de telle façon que les burins sont capables d'effectuer un traitement idéal du sol. Les bras 8 sont cachés, en considérant les plans qui s'étendent perpendiculairement sur l'axe géométrique du cylindre. Cet agencement est naturellement logique. Vers les extrémités du cylindre 7 les burins sont progressivement orientés vers l'extérieur. Ceci apparaît des figures 11 et 12.

A la figure 11 on remarque que les rainures 16′ sont orientées sous un angle d'à peu près 25°, alors qu'à la figure 12 les rainures 16″ ont un angle d'à peu près 40° par rapport au plan où sont distribués les autres burins du tambour 1. Grâce à cela on forme dans le sol une rainure ou une "partie traitée" qui est légèrement plus large que le cylindre 7 même.

Des chariots non représentés dans ces figures peuvent également être prévus afin que, lorsque la machine a été ajustée à la profondeur de travail désirée, ils peuvent soutenir la machine lors du traitement du sol.

La description donnée ci-dessus d'une machine pour broyer des souches d'arbres, de racines et autres qui seraient restées dans le sol, il apparaît que les sols qui sont déboisés non seulement peuvent être traités dans des conditions techniquement très favorables afin d'en enlever les souches d'arbres et des racines et autres, mais également qu'après ce travail et dû à la structure du sol ainsi formé on dispose d'un sol particulièrement adapté pour en faire des terrains de sport, des pelouses, des champs d'agriculture etc.

L'invention n'est toutefois pas limitée à la forme de réalisation décrite ci-dessus et plusieurs modifications peuvent y être apportées sans pour autant quitter le cadre de l'invention.

## Revendications

1. Machine pour broyer des souches d'arbres, des racines et autres, caractérisée en ce qu'elle comporte les éléments suivants :

1. au moins un tambour, entre autres formé d'un cylindre (7) qui est pourvu de burins (14) sur son contour;

2. des moyens pour faire tourner ledit cylindre autour de son axe;

3. des moyens pour ajuster la profondeur à laquelle ledit cylindre (7) doit travailler et pour maintenir ledit cylindre (7) à la profondeur ajustée.

2. Machine suivant la revendication 1, caractérisée en ce que lesdits burins (14) sont montés à l'extrémité de bras (8) sensiblement radiaux qui sont soudés sur ledit cylindre (7).

3. Machine suivant la revendication 2, caractérisée en ce que lesdits bras (8) sont soudés en rangées sur ledit cylindre (7) et tous les bras (8) d'une rangée sont cachés par rapport aux bras de deux rangées voisines, de telle manière que par une rotation complète dudit cylindre une surface uniforme du sol est traitée par les burins (14) montés sur lesdits bras, ladite surface du sol correspond à peu près au développement dudit cylindre.

4. Machine suivant une des revendications 1 à 3, caractérisée en ce que les burins (14) qui sont montés sur lesdits bras (8) aux alentours dudit cylindre, sont progressivement orientés vers l'extérieur.

5. Machine suivant la revendication 4, caractérisée en ce que ladite partie du bord correspond à peu près aux zones situées aux deux extrémités du cylindre (7), lesdites zones comportant deux bras (8).

6. Machine suivant une des revendications 4 et 5, caractérisée en ce que l'angle sous lequel lesdits burins (14) sont ajustés par rapport auxdits bras (8), passe progressivement de 25° à 40° aux extrémités dudit cylindre (7).

7. Machine suivant une des revendications 1 à 6, caractérisée en ce que chaque bras (8) porte une plaque (9) contre laquelle une contre-plaque peut être vissée, de telle manière qu'un burin (14) est maintenu coincé entre la plaque et la contre-plaque, à cette fin une des plaques, de préférence la contre-plaque, comporte une rainure (16) pour recevoir le burin (14).

8. Machine suivant une des revendications 4 à 7, caractérisée en ce que chaque bras (8) comporte une encoche (13) dont la profondeur est supérieure à la largeur de la plaque (9) de telle manière que ce burin (14), qui est compris dans une rainure (16) de la contre-plaque (11), est également maintenu contre cette encoche (13).

9. Machine suivant une des revendications 1 à 8, caractérisée en ce que chaque burin (14) est pourvu d'une plaquette widia (15) sur le côté actif.

10. Machine suivant une des revendications 1 à 9, caractérisée en ce que lesdits burins (14) sont légèrement pointus à une extrémité libre.

11. Machine suivant une des revendications 1 à 10, caractérisée en ce que ledit cylindre (7) est pourvu d'un axe (22) qui est calé par rapport à une plaque (24) circulaire en travers ayant une ouverture centrale qui est reliée au cylindre (7) à l'aide d'une soudure.

12. Machine suivant la revendication 11, caractérisée en ce que la liaison entre ledit axe (22) et ladite plaque (24) circulaire en travers est réalisée par une pièce de liaison (26) dont une partie comporte une conicité qui correspond à celle de ladite ouverture centrale dans la plaque (24), laquelle pièce de liaison comporte une entaille (27) en un endroit en longueur et de préférence deux entailles (28) discontinues, de telle manière que lors du serrage des vis (29) qui doivent relier la pièce de liaison (26) à la plaque (24), la pièce de liaison (26) soit maintenue serrée sur l'axe (22).

13. Machine suivant une des revendications 11 et 12, caractérisée en ce que ledit cylindre (7) est également relié à l'aide d'un roulement à billes (31) par rapport à des plaques (34) latérales pourvues à cette fin et appartenant à une coiffe (17) qui protège partiellement le cylindre à l'avant, au-dessus et partiellement à l'arrière, à un bras (2) mobile qui peut être bougé vers le haut et le bas par rapport au châssis de la machine à l'aide d'un cylindre (6) hydraulique.

14. Machine suivant une des revendications 1 à 13, caractérisée en ce que ledit cylindre est ajusté horizontalement et est entraîné par des roues dentées (19) montées sur l'axe (22) de ce dernier, lesdites roues dentées étant maintenues sur cet axe (22) par une pièce (32) de fermeture en forme d'anneau ayant une partie centrale et divisée en forme conique dont la conicité correspond à la conicité de l'alésage interne des roues dentées (19) de telle manière que lors du serrage des vis (29') la partie conique de la pièce (32) de fermeture en forme d'anneau est calée sur l'axe (22).

Fig.6.

Fig.1.

Fig.2.

Fig.3.

Fig.4.

Fig.5.

EP 0 334 436 A1

Fig.7.

Fig.8.

Fig.9.

Fig.10.

Fig.11.

Fig.12.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | US-A-3931841 (BLUM)<br>* colonne 6, ligne 45 - colonne 10, ligne 50; figures 1-5, 9-12 * | 1, 11 | A01G23/06 |
| A | | 7 | |
| | --- | | |
| X | US-A-4044841 (SMITH)<br>* colonne 5, ligne 12 - colonne 6, ligne 28 *<br>* colonne 15, ligne 40 - colonne 16, ligne 57; figures 1, 2, 16, 17 * | 1-3, 10 | |
| Y | | 14 | |
| | --- | | |
| Y | US-A-2908337 (SURPRISE)<br>* colonne 3, ligne 68 - colonne 4, ligne 8 * | 14 | |
| | --- | | |
| X | US-A-4180107 (GROVER)<br>* le document en entier * | 1 | |
| A | | 2, 3, 11, 12 | |
| | ----- | | |

| DOMAINES TECHNIQUES RECHERCHES (Int. Cl.4) |
|---|
| A01G<br>A01B |

Le présent rapport a été établi pour toutes les revendications

| Lieu de la recherche | Date d'achèvement de la recherche | Examinateur |
|---|---|---|
| LA HAYE | 05 JUILLET 1989 | HERYGERS J.J. |